# EUROPEAN PATENT SPECIFICATION

(11) **EP 3 414 281 B1**
(45) Date of publication and mention of the grant of the patent: **09.10.2019**
(21) Application number: 17703170.5
(22) Date of filing: 08.02.2017
(51) Int. Cl.: C08J 9/00, C08J 9/10, C08G 18/00, C08G 59/02, C08G 59/18, C08G 18/10, C08L 75/04

(54) **THERMOPLASTIC FORMULATION WITH IMPROVED ADHESION**
THERMOPLASTISCHE FORMULIERUNG MIT VERBESSERTER HAFTUNG
FORMULATION THERMOPLASTIQUE PRÉSENTANT UNE ADHÉRENCE AMÉLIORÉE

(30) Priority: 09.02.2016 EP 16154861
(43) Date of publication of application: 19.12.2018
(73) Proprietor: Sika Technology AG, 6340 Baar (CH)
(72) Inventor: FRICK, Karsten, 5453 Remetschwil (CH); KRÜGER, Christian, 8049 Zürich (CH); CIL, Engin, 5615 Fahrwangen (CH)
(74) Representative: Sika Patent Attorneys
(86) International application number: PCT/EP2017/052786
(87) International publication number: WO 2017/137454

(56) References cited:
- WO-A1-2016/005536
- US-A1- 2014 131 910
- US-A1- 2015 337 181

## Description

### Technical Field

The present invention relates to a thermally expandable thermoplastic composition, resulting in a stable foam material, as well as a baffle and/or reinforcement element for hollow structures comprising such a thermally expandable composition, a process for manufacturing such a baffle and/or reinforcement element, its use to seal, baffle, or reinforce a hollow structure, and a method for sealing, baffling, or reinforcing a hollow structure.

### Background of the Invention

Manufactured products often contain orifices and cavities or other hollow parts that result from the manufacturing process and/or that are designed into the product for various purposes, such as weight reduction. Automotive vehicles, for example, include several such orifices and cavities throughout the vehicle, including in the vehicle's structural pillars and in the sheet metal of the vehicle doors. It is often desirable to seal such orifices and cavities so as to minimise noise, vibrations, fumes, dirt, water, humidity, and the like from passing from one area to another within the vehicle by means of sealing members or baffle elements built into the orifice or cavity. Likewise, such members or elements often fulfil an additional task of reinforcing the hollow structure of the manufactured product, e.g. automotive part, so much that it becomes more resistant to mechanical stress but still maintains the low weight advantage of the hollow structure.

Such elements used for sealing, baffling or reinforcing often consist of a carrier, made of plastic, metal, or another rigid material, and one or more layers of a thermoplastic material attached to it which is able to expand its volume when heat or another physical or chemical form of energy is applied, but they can also be entirely made of expandable material. Using an adequate design, it is possible to insert the baffle or reinforcement element into the hollow part of the structure during the manufacturing process but also to leave the inner walls of the structure still accessible (or the cavities passable) by e.g. a liquid. For example, during the manufacture process of a vehicle, the hollow parts of a metal frame can still be largely covered by an electro-coating ("e-coat") liquid while the baffle or reinforcement elements are already inserted, and afterwards during a heat treatment step, the expandable thermoplastic material of the baffle or reinforcement element expands to fill the cavities as intended.

The development of such baffles or reinforcement elements has led to highly advanced systems, where the expandable material is able to increase its volume by up to 1000% or more, forming a stable foam-like structure that fills the cavities and adheres to the walls of the structure intended to be sealed, baffled, or reinforced. Especially in automotive manufacturing, this has led to considerable weight reduction and excellent dampening of noise or vibrations in the car body.

Currently employed thermally expandable compositions often consist of polymers that can be cross-linked by peroxides, such as ethylene-vinyl acetate polymers. In order to obtain foams, these compositions furthermore contain blowing agents. Under activation conditions, such as elevated temperature, curing of the cross-linkable network takes place, while simultaneously the blowing agent decomposes and releases gases. This leads to the above mentioned volume expansion and the formation of a stable foam which in ideal cases fills the cavity as intended and adheres to its walls. Such a system is for example disclosed in DE 10 2011 080 223 A1.

For example when used in automotive manufacturing, these thermally expandable compositions are normally required to adhere firmly to the inner walls of the hollow structures, e.g. structural pillars, to be filled and/or reinforced for an optimal baffle or reinforcement performance. For this reason, said thermoplastic compositions often comprise adhesion promoters that help building a strong adhesion with the substrate which often consists of raw or anodized metal.

However, especially in automotive manufacturing, these metal surfaces are in most cases at least partially covered by oil, grease, or other process fluids, which creates an interlayer detrimental to the adhesion performance between the thermoplastic composition and the substrate. The effect of this is an imperfect adhesion, which leads to unwanted effects such as poor vibration dampening, lowered corrosion protection, or poor sealing against humidity. Furthermore, variable curing conditions, e-coat bath influence, different metals and metal finish (hot-dip galvanization, electro galvanization) cause a broad variety of possible substrate surfaces on which sufficient adhesion has to be ensured.

WO 2016/005536 A1 discloses a thermally expandable composition comprising a polymer crosslinkable by peroxide, a peroxide, an acrylate and a blowing agent, the composition further comprising ethylene-glycidyl methacrylate as adhesion promoter.

US 2014/131910 A1 discloses a similar thermally hardenable preparation but improves the adhesion by choosing the mass ratio of the peroxide to the acrylate.

US 2015/337181 A1 discloses expandable epoxy resin compositions comprising epoxy-terminated polyurethane polymers.

Commonly used adhesion promoters are not able to solve this problem satisfactorily and it is thus desirable to obtain a thermally expandable composition that exhibits a controlled, uniform volumetric expansion of at least 1000% and produces stable foam with excellent adhesion properties, even on oily metal surfaces.

### Summary of the Invention

It is an object of the present invention to provide a thermally expandable composition that shows superior adhesion properties, especially on metallic substrates and in particular on oily surfaces.

Surprisingly, the present invention provides a solution to that problem by providing a composition comprising a polymer that is cross-linkable by peroxide, a peroxide, preferably an acrylate, a blowing agent, preferably an activator for said blowing agent, and a polyurethane polymer having terminal epoxide groups.

Thus, the present invention achieves this object with the features of independent claim 1 by providing a thermally expandable composition, comprising
(a) at least one polymer P, cross-linkable by peroxide,
(b) at least one peroxide,
(c) preferably at least one acrylate A,
(d) at least one blowing agent B,
(e) preferably at least one activator for blowing agent B,
(f) at least one epoxide group terminated polymer of the formula (I), 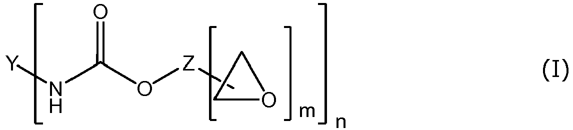
wherein Y represents a n-valent radical of a linear or branched polyurethane polymer terminated with isocyanate groups after the removal of the n terminal isocyanate groups, Z represents a (1+m)-valent radical of an aliphatic, cycloaliphatic, aromatic or araliphatic epoxide containing a primary or secondary hydroxyl group after the removal of the hydroxyl group and m epoxide groups, m represents an integer with a value of 1, 2, or 3, and n represents an integer with a value from 2 to 4.

The composition according to the present invention is particularly suitable to be used in a sealing, baffle or reinforcement element, for example in automotive applications. Further aspects of the present invention are subject of other independent claims. Preferred embodiments of the invention are subject of dependent claims.

### Detailed Description of the Invention

The unit term "wt.-%" means percentage by weight, based on the weight of the respective total composition, if not otherwise specified. The terms "weight" and "mass" are used interchangeably throughout this document.

Compound names beginning with "poly" designate on the one hand polymers as known to the person with skill in chemistry, and on the other hand substances, which formally contain, per molecule, two or more of the functional groups occurring in their names. The compound can be a monomeric, oligomeric or polymeric compound. For instance, a polyol is a compound having two or more hydroxy groups; a polyisocyanate is a compound having two or more isocyanate groups.

The average molecular weight is understood to mean the number average molecular weight, as determined using conventional methods, preferably by gel permeation-chromatography (GPC) using polystyrene as standard, styrenedivinylbenzene gel with porosity of 100 Angstrom, 1000 Angstrom and 10000 Angstrom as the column and tetrahydrofurane as a solvent, at 35°C.

The term "functionality" in connection with a molecule describes in this document the number of chemical functional groups per molecule. The term "polyfunctional" describes a molecule with more than 1 functional groups of a given type. For example, a polyfunctional acrylate with a functionality of 3 describes a molecule with 3 acrylate groups. The term "average functionality" is used if a mixture of molecules is present that differ slightly in individual functionality, but in average exhibit a given functionality, as it is sometimes the case with technical grade chemicals.

The term "radical" used in this document in connection with polymers cross-linkable by peroxide describes, as known to a person with ordinary skill in the art of chemistry, a chemical species with an unpaired valence electron. The cross-linking reactions involved in the curing or hardening of the polymer system of the present invention follow a radical mechanism.

Melt flow index (MFI) is determined by the ASTM D1238 standard method, using a capillary rheometer at 190 °C and a weight of 2.16 kg. MFI values describe the amount of polymer coming out of the capillary under pressure of the defined weight and at the defined temperature during a given time.

Volume changes on the thermally expandable material are determined using the DIN EN ISO 1183 method of density measurement (Archimedes principle) in deionised water in combination with sample mass determined by a precision balance.

All industrial norms mentioned in this document are referring to the respective current versions at the time of filing.

The present invention comprises as a first necessary component at least one polymer P that is cross-linkable by peroxide. Principally all thermoplastic polymers or thermoplastic elastomers capable of cross-linking reactions with peroxides are suitable. The artisan skilled in the field describes polymers as "cross-linkable by peroxide" if these polymers contain functional groups, e.g. C-C double bonds, which release hydrogen atoms under influence of a radical starter, e.g. a peroxide, from their backbone or side chain, such that a radical remains that is able to radically attack other polymer chains in a subsequent step, leading to a radical chain reaction cross-linking process and ultimately to a polymer network.

Suitable polymers P include, for example, styrene-butadiene copolymers, styrene-isoprene copolymers, ethylene-vinyl acetate copolymers (EVA), ethylene-methacrylate copolymers, ethylene-ethyl acrylate copolymers, ethylene-butyl acrylate copolymers (EBA), ethylene-(meth)acrylic acid copolymers, ethylene-2-ethylhexyl acrylate copolymers, ethylene-acrylic ester copolymers, polyolefinc block copolymers, and polyolefins such as polyethylene or polypropylene.
The copolymers, meaning polymers made from more than one type of monomer, can be block type copolymers or random copolymers.
Polymers P can also be further functionalised, meaning they can contain further functional groups such as hydroxyl, carboxy, anhydride, acrylate, and/or glycidylmethacrylate groups.

Preferred for the present invention is one or more polymer P with an average melt flow index (MFI) of between 1 and 200 g/10 min, preferably between 10 and 100 g/10 min, more preferably between 25 and 75 g/10 min, most preferably between 35 and 55 g/10 min.

Polymer P preferably comprises or essentially consists of ethylene-vinyl acetate (EVA). In this case, the content of vinyl acetate monomers in EVA should be between 8 and 45 wt.-%, preferably between 15 and 30 wt.-%, based on the total weight of the EVA polymer.

In a preferred embodiment, polymer P comprises EVA with 32 wt.-% vinyl acetate monomer and a MFI of 43 g/10 min.

In another preferred embodiment, polymer P comprises ethylene-butyl acrylate (EBA) copolymer with 35 wt.-% butyl acrylate monomer and a MFI of 40 g/10 min.

In cases where more than one type of polymer is used, the individual MFI combine to an average MFI of the used polymer mixture, which has to be determined according to ASTM D1238.

The thermally expandable composition according to the present invention preferably contains said at least one polymer P with an amount of between 30 and 80 wt.-%, preferably between 50 and 75 wt.-%, based on the weight of the total composition.

In a preferred embodiment, more than one type of polymer is used as polymer P. It was found to be beneficial for the properties of the inventive composition to use at least two types of polymer (herein named P1 and P2) with different melt flow index (MFI), one much higher than the other. For example, an especially preferred embodiment uses a first polymer P1 with an MFI of between 100 and 200 g/10 min and a second polymer P2 with an MFI of between 0.1 and 60 g/10 min, preferably between 0.1 and 10 g/10 min, preferably with a weight ratio of the two polymers P1 : P2 in the composition of 0.7 to 1.5, preferably 0.9 to 1.3.

A preferred embodiment using two EVA copolymers comprises as polymer P1 an EVA with 18 wt.-% vinyl acetate monomer and a melt flow index (MFI) of 150 g/10 min and as polymer P2 an EVA with 28 wt.-% vinyl acetate monomer and a MFI of 6 g/10 min. Most preferred weight ratio of the two polymers P1 : P2 is between 0.9 and 1.3.

Preferred EVA polymers include, e.g., Elvax® 150, Elvax® 240, Elvax® 260, Elvax® 420 (all by DuPont), or the corresponding Evatane® copolymers (by Arkema).

When using two polymers, comprising P1 with an MFI of between 100 and 200 g/10 min and a second polymer P2 with an MFI of between 0.1 and 60 g/10 min, a preferred amount for P1 is between 25 and 45 wt.-%, preferably between 30 and 40 wt.-% and for P2 between 20 and 40 wt.-%, preferably between 25 and 36 wt.-%.

Another preferred embodiment uses two ethylene-butyl acrylate (EBA) copolymers, comprising as P1 an EBA with 34 wt.-% butyl acrylate monomer and a MFI of 40 g/10 min and as P2 an EBA with 30 wt.-% butyl acrylate monomer and a MFI of 2 g/10 min.

A second necessary component of the thermally expandable composition according to the present invention is at least one peroxide, with an amount of between 0.2 and 2.5 wt.-%, preferably between 0.3 and 2 wt.-%, more preferably between 0.4 and 1.5 wt.-%, based on the total weight of the composition.

It is advantageous for the inventive composition to use a peroxide that is essentially inert at room temperature (23 °C) and exhibits an activation temperature suitable for the intended purpose. For example, if the composition is used for a baffle and/or reinforcement element in automotive manufacturing, an activation temperature of between 110 and 250 °C is preferred. Furthermore, it is advisable to select a peroxide with an activation temperature compatible with the decomposition temperature of the blowing agent. If those two temperatures differ too much, it may be more difficult to obtain a thermally expandable composition with optimal performance and stability. The peroxide should also preferably be essentially stable at temperatures up to, e.g., 100 °C as such temperatures are commonly reached under injection moulding or thermoplastic compounding conditions during manufacture of objects comprising the inventive thermoplastic compositions. Apart from that, other, at room temperature solid components (such as in some cases polymer P) have to be compatible with these components as well, for example in terms of softening or melting point.
It is furthermore advantageous for the inventive composition to use at least one peroxide that exhibits a half-life of 10 h at a temperature of between 90 °C and 130 °C.

Preferred peroxides for the inventive composition are organic peroxides, such as keton peroxides, diacyl peroxides, peresters, perketals, and hydroperoxides. Examples of such preferred peroxides include cumene hydroperoxide, t-butyl peroxide, bis(t-butylperoxy)-diisopropyl benzene, di(t-butylperoxy isopropyl) benzene, dicumyl peroxide, t-butylperoxy benzoate, di-alkylperoxy dicarbonate, diperoxyketals (such as 1,1-di-t-butylperoxy-3,3,5-trimethyl cyclohexane), keton peroxides (such as methyl ethyl keton peroxide), and 4,4-di-t-butylperoxy-n-butyl valerate.

Especially preferred are 3,3,5,7,7-pentamethyl-1,2,4-trioxepane, 2,5-dimethyl-2,5-di(t-butylperoxy)-3-hexyne, di-t-butyl peroxide, 2,5-dimethyl-2,5-di(t-butylperoxy) hexane, t-butyl cumyl peroxide, di(t-butylperoxy isopropyl) benzene, dicumyl peroxide, butyl-4,4-di(t-butylperoxy) valerate, t-butylperoxy-2-ethylhexyl carbonate, 1,1-di(t-butylperoxy)-3,3,5-trimethyl cyclohexane, t-butylperoxy benzoate, di(4-methylbenzoyl) peroxide, and dibenzoyl peroxide.

Most preferred peroxides for the present inventive composition include dicumyl peroxide, available for example under the trade names Perkadox® BC-40B-PD by Akzo Nobel or Peroxan® DC-40 PK by Pergan and/or di(t-butylperoxyisopropyl) benzene, available for example under the trade names Perkadox® 14-40B-PD by Akzo Nobel or Peroxan® BIB-40 P by Pergan, wherein di(t-butylperoxyisopropyl)benzene is especially preferred.

It may be advantageous for the present invention to use peroxide that is immobilised on a support material, such as silica, kaolin, and/or calcium carbonate, or other suitable materials. This approach may facilitate handling, dosage, and evenly distribution of the peroxide in the composition. Examples for such immobilised peroxide include Perkadox® BC-40B-PD by Akzo Nobel (40 wt.-% dicumyl peroxide on calcium carbonate) or Perkadox® 14-40K-PD by Akzo Nobel (40 wt.-% di(t-butylperoxyisopropyl)benzene on clay and silica). However, care has to be taken in such cases to correctly calculate the wt.-% and especially the equivalents of active substance in the composition, as in this document these values always refer to active compound, and do not include possibly present support material.

The next essential component of the present inventive composition is at least one blowing agent B.

A suitable blowing agent B may be a chemical or physical blowing agent. Chemical blowing agents are organic or inorganic compounds that decompose under influence of, e.g., temperature or humidity, while at least one of the formed decomposition products is a gas. Physical blowing agents include, but are not limited to, compounds that become gaseous at a certain temperature. Thus, both chemical and physical blowing agents are suitable to cause an expansion in the thermally expandable composition.

Chemical blowing agents are preferred for the present inventive composition, including but not limited to azo compounds, hydrazides, nitroso compounds, carbamates, and carbazides.

Suitable chemical blowing agents B include, e.g., azodicarbonamide, azoisobutytronitrile, azocyclohexyl nitrile, dinitrosopentamethylene tetramine, azodiamino benzene, benzene-1,3-sulfonyl hydrazide, calcium azide, 4,4'-diphenyldisulphonyl azide, p-toluenesulphonyl hydrazide, p-toluenesulphonyl semicarbazide, 4,4'-oxybis(benzenesulphonylhydrazide), trihydrazino triazine, and N,N'-dimethyl-N,N'-dinitrosoterephthalamide, and combinations thereof and the like.

Also suitable are dual chemical systems, such as acid/base systems that generate gases upon reaction. One preferred example is sodium hydrogen carbonate and citric acid, a system that generates carbon dioxide when combined in a suitable medium.

Suitable physical blowing agents include expandable microspheres, consisting of a thermoplastic shell filled with thermally expandable fluids or gases. An example for such suitable microspheres are Expancel® microspheres (by AkzoNobel).

In preferred embodiments, the blowing agent comprises or essentially consists of azodicarbonamide and/or 4,4'-oxybis(benzenesulphonyl hydrazide).

Preferably, the blowing agent B is included in the present inventive composition with an amount of between 2 and 15 wt.-%, preferably between 4 and 12 wt.-%, more preferably between 5 and 10 wt.-%, based on the total weight of the composition.

The heat required for the decomposition reaction that causes the foaming (expansion) can be applied externally or internally, the latter e.g. from an exothermic reaction. Preferably, the blowing agent is activated (i.e. starts to decompose under gas release) at a temperature of between 150 °C to 200 °C, more preferably between 160 °C and 190 °C.

If the present inventive thermally expandable composition finds a use in a baffle and/or reinforcement element, e.g. in automotive manufacturing, it is preferable that the activation temperature of the blowing agent is adjusted to the manufacturing conditions of the automotive part to be baffled or reinforced. As an example, the baffle and/or reinforcement element can be inserted into a cavity of a structure that needs to be treated by an electrocoating liquid, in its unexpanded state still leaving the surface of the structure accessible, and subsequently, during the heat treatment of the automotive part (i.e. the curing procedure for the electrocoating liquid), the baffle and/or reinforcement element simultaneously (or shortly thereafter) expands to its intended final shape and at least partially closes or fills the cavity. In such a case, the expansion temperature should correspond to the temperature conditions of said heat treatment, e.g. to between 150 °C and 220 °C.

Accordingly, it is advisable to select the peroxide used in the inventive composition in such a way that its activation temperature is in the same range, or slightly below the decomposition temperature of the blowing agent. This ensures that the radical mechanisms leading to polymer cross-linking take place at a point which enables the formation of a stable, foam-like structure.

It may be advantageous and is preferable for the present invention to use an activator, accelerator, or catalyst in combination with blowing agent B. Examples of compounds suitable for this purpose include zinc compounds, such as zinc oxide, zinc acetate, zinc stearate, zinc bis(p-toluenesulphinate), or zinc bis(benzenesulphinate), titanium oxide, magnesium oxide, and/or (modified) urea compounds. Most preferred are zinc compounds, especially zinc oxide, and mixtures of zinc compounds, especially mixtures of zinc oxide and zinc acetate. These activators are preferably present in the compositions in amounts between 1 and 10 wt.-%, preferably between 2 and 8 wt.-%, more preferably between 2.5 and 7 wt.-%, based on the total weight of the composition.
It is strongly advised also for optionally present secondary activators to optimize their amount relative to the amount of blowing agent B. For the present invention, it is preferred to use an amount of activator of between 10 and 80 wt.-%, preferably between 12 and 60 wt.-%, more preferably between 15 and 50 wt.-%, most preferably between 20 and 35 wt.-%, based on the weight of blowing agent B comprised in the composition.

The inventive thermally expandable composition preferably comprises such an activator for said blowing agent B with an amount of between 2 and 15 wt.-%, preferably between 4 and 10 wt.-%, more preferably between 5 and 8 wt.-%, based on the total weight of the composition.

The inventive composition furthermore comprises at least one epoxide group terminated polymer of the formula (I), 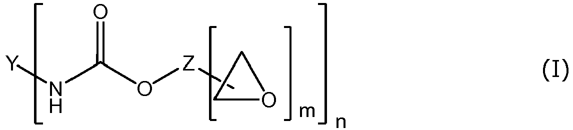 wherein Y represents a n-valent radical of a linear or branched polyurethane polymer **PU** terminated with isocyanate groups after the removal of the n terminal isocyanate groups, Z represents a (1+m)-valent radical of an aliphatic, cycloaliphatic, aromatic or araliphatic epoxide **EP** containing a primary or secondary hydroxyl group after the removal of the hydroxyl group and m epoxide groups, m represents an integer with a value of 1, 2, or 3, preferably 2, and n represents an integer with a value from 2 to 4.

The polymer of formula (I) acts as an adhesion promoter and improves the adhesion of the inventive composition on various surfaces, including oily surfaces.

The polymer of formula (I) is preferably comprised in the inventive composition with an amount of between 1 and 30 wt.-%, preferably between 1.5 and 25 wt.-%, more preferably between 2 and 20 wt.-%, based on the total weight of the composition.

The linear or branched polyurethane polymer **PU** mentioned above has a structure according to formula (II), 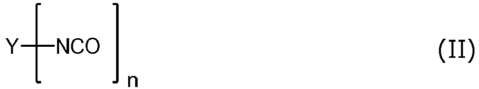 wherein Y and n have the same meaning as described further above.

The polyurethane polymer **PU,** represented in formula (II), is obtained from at least one diisocyanate or triisocyanate and from at least one polymer having terminal hydroxyl groups, thiol groups, primary amino groups or secondary amino groups. A molecule, in particular a polymer, having more than one hydroxyl group is known to the skilled person in the art as a polyol. Accordingly, a molecule, in particular a polymer, having more than one amino group is known to the skilled person in the art as a polyamine.

Suitable polyols for the production of polyurethane polymer **PU** include, for example, polyoxyalkylene polyols, also referred to as polyether polyols, which are the polymerization product of ethylene oxide, 1,2-propylene oxide, 1,2- or 2,3-butylene oxide, tetrahydrofuran or mixtures thereof, optionally polymerized by means of a starter molecule with two or three active H atoms such as water or compounds with two or three OH groups, for example. It is possible to use polyoxyalkylene polyols that have a low unsaturation degree (measured according to ASTM D-2849-69 and indicated in milliequivalent unsaturation per gram polyol (mEq/g)), produced, for example, by means of so-called double metal cyanide complex catalysts (abbreviated DMC catalysts), as well as polyoxyalkylene polyols with a higher unsaturation degree, produced, for example, by means of anionic catalysts such as NaOH, KOH or alkali alcoholates. Particularly suitable are polyoxypropylenediols and -triols, in particular with an unsaturation degree of less than 0.02 mEq/g and/or with a molecular weight in the range from 1000 to 30,000 g/mol, polyoxybutylenediols and -triols, polyoxypropylenediols and -triols, in particular with a molecular weight of 400 to 8000 g/mol, as well as so-called "EO-endcapped" polyoxypropylenediols and -triols (provided with ethylene oxide terminal group). The latter are special polyoxypropylene polyoxyethylene polyols that are obtained, for example, by alkoxylating pure polyoxypropylene polyols after the end of the polypropoxylation with ethylene oxide and as a result comprise primary hydroxyl groups.

Particularly preferred polyether polyols are polymerization products of ethylene oxide, 1,2-propylene oxide, 1,2- or 2,3-butylene oxide, tetrahydrofuran or mixtures thereof; particularly preferable are polypropylene oxides and polytetrahydrofurans. Such polyether polyols are commercially available. Commercially available polytetrahydrofurans are, for example, the PolyTHF® products from BASF, such as PolyTHF®2000, PolyTHF®2500 CO or PolyTHF®3000 CO. Commercially available polypropylene oxides are, for example, Caradol® products from Shell, such as Caradol®2000 or Caradol®ED56, or Acclaim® products from Bayer, such as Acclaim® Polyol 2200, Acclaim® Polyol 12200 or Acclaim® Polyol 4200. Further possible polyether polyols are Voranol®1010L, Voranol® EP1900 or Voranol®CP4755 from Dow. Especially preferred polyether polyol is polytetrahydrofuran.

The average molecular weight of the polyether polyols used can vary. The polyether polyols have, for example, a weight average molecular weight (Mw) in the range from 500 to 5000 g/mol, preferably 1000 to 3000 g/mol and particularly preferably in the range from 1500 to 2500 g/mol, in particular approximately 2000 g/mol.

Unless otherwise indicated, the weight average molecular weight is determined by the GPC method in the present application. This is a type of liquid chromatography in which molecules of different size are separated based on their different diffusion volumes. Depending on the polymer to be determined, different separation columns are used for this purpose: columns: SDV 100, 1000, 10⁴ Å, (0.8 x 30 cm, 5 µm); eluent: THF; flow rate: 1 mL/min; temperature: 35 °C; calibration relative to poly(1,4-butadiene) standard: 831-1,060,000 g/mol; sample preparation: approximately 100 mg sample were dissolved in 10 mL THF and filtered with a 0.45 µm PTFE membrane filter.

The OH functionality of the polyether polyols used is preferably in the range of approximately 2, for example, in the range from 1.9 to 2.1. Optionally, a compound with an OH functionality of 3, such as, for example, trimethylolpropane, butoxylated trimethylolpropane (for example, Simulsol®TOMB), and/or pentaerythritol can be added to the polyether polyol in order to increase the OH functionality.

The OH functionality can be measured by titration, for example. The hydroxyl group-containing substance is reacted with an excess of diisocyanate, and after the reaction, the isocyanate excess is determined titrimetrically using a 0.1 M HCI solution, and the hydroxyl number is calculated.

Furthermore suitable polyols include hydroxyl-terminated rubbers. One or more OH-terminated rubbers can be used, wherein the use of two OH-terminated rubbers, in particular two OH-terminated polybutadienes, are preferred. Here, OH-terminated rubbers are understood to refer, for example and preferably, to hydroxyl-terminated polybutadienes and to castor oil-based polyols, wherein hydroxyl-terminated polybutadienes are particularly preferable. Polyols based on castor oil include castor oil of various grades, and castor oil derivatives.

Commercially available hydroxyl-terminated polybutadienes are, for example, the Poly bd® and Krasol® products from Cray Valley, such as Krasol® LBH-P 2000 or Poly bd® R45V, or Polyvest® HT from Evonik, or Hypro® 2800X95 HTB from Emerald Materials. Castor oil-based polyols are, for example, the Albodur® products from Alberdingk Boley, such as Albodur®901, or the Polycine® products from Baker Castor Oil Company, such as Polycine®-GR80.

The hydroxyl-terminated rubbers used preferably have a weight average molecular weight (Mw) of less than 15,000 g/mol and preferably less than 4000 g/mol.

The OH functionality of the hydroxyl-terminated rubbers used is preferably in the range from 1.7 to 2.2 for anionically produced types or from 2.2 to 2.8 for types produced by free radical polymerization. If the epoxy group-terminated impact modifier is used in a 2K epoxy resin adhesive, it is preferable to use a hydroxyl-terminated rubber, in particular a hydroxyl-terminated butadiene, with an OH functionality of less than or equal to 2. If the epoxy group-terminated impact modifier is used in a 1K epoxy resin adhesive, it is preferable to use a hydroxyl-terminated rubber, in particular a hydroxyl-terminated butadiene, with an OH functionality in the range from 2.4 to 2.8.
styrene-acrylonitrile grafted polyether polyols, as supplied, for example, by Elastogran under the name Lupranol®;
Also suitable as polyols are polyhydroxy-terminated acrylonitrile/butadiene copolymers, of the kind preparable, for example, from carboxyl-terminated acrylonitrile/butadiene copolymers (available commercially under the name Hypro® (formerly Hycar®) CTBN from Emerald Materials), and from epoxides or amino alcohols;
Furthermore suitable are polyester polyols prepared, for example, from dihydric to trihydric alcohols such as, for example, 1,2-ethanediol, diethylene glycol, 1,2-propanediol, dipropylene glycol, 1,4-butanediol, 1,5-pentanediol, 1,6-hexanediol, neopentylglycol, glycerol, 1,1,1-trimethylolpropane or mixtures of the aforementioned alcohols, with organic dicarboxylic acids or their anhydrides or esters, such as, for example, succinic acid, glutaric acid, adipic acid, suberic acid, sebacic acid, dodecanedicarboxylic acid, maleic acid, fumaric acid, phthalic acid, isophthalic acid, terephthalic acid, and hexahydrophthalic acid, or mixtures of the aforementioned acids, and also polyester polyols from lactones such as ε-caprolactone, for example;
Suitable as polyols are furthermore polycarbonate polyols of the kind obtainable by reacting, for example, the abovementioned alcohols - those used to synthesize the polyester polyols - with dialkyl carbonates, diaryl carbonates or phosgene;
Also suitable are polyols of the kind obtained by reduction of dimerized fatty acids.

The polyurethane polymer **PU** may comprise only one type of polyol. Preferred single polyols are polyether polyols, in particular polytetrahydrofuran. It may however be advantageous to use a mixture of different polyols for the production of polyurethane polymer **PU.** In a preferred embodiment, polymer **PU** comprises a polyether polyol, in particular polytetrahydrofuran and a polybutadiene polyol.

Apart from polyols, it is also possible to use polyamines, leading to polyurea polymers when reacted with polyisocyanates. It is however preferred to use only polyols, or a mixture of polyols and polyamines. Among the suitable polyamines are in particular amino group-terminated polyethylene ethers or polypropylene ethers, as sold, for example, under the name Jeffamine® by Huntsman; amino group-terminated polybutylene ethers, polybutadienes, butadiene/acrylonitrile copolymers, more particularly of the kind sold, for example, under the name Hypro® (formerly Hycar®) ATBN by Emerald Materials; and amino group-terminated synthetic rubbers.

Suitable polyisocyanates for the production of polyurethane **PU** are diisocyanates or triisocyanates. Suitable diisocyanates are aliphatic, cycloaliphatic, aromatic or araliphatic diisocyanates, in particular commercial products such as methylene diphenyl diisocyanate (MDI), hexamethylene diisocyanate (HDI), toluene diisocyanate (TDI), toluidine diisocyanate (TODI), isophorone diisocyanate (IPDI), trimethyl hexamethylene diisocyanate (TMDI), 2,5- or 2,6-bis(isocyanatomethyl)-bicyclo[2.2.1]heptane, 1,5-naphthalene diisocyanate (NDI), dicyclohexyl methyl diisocyanate (H₁₂MDI), p-phenylene diisocyanate (PPDI), m-tetramethyl xylylene diisocyanate (TMXDI), etc., as well as their dimers. HDI, IPDI, MDI or TDI are preferable. Particularly preferable are aliphatic and in particular cycloaliphatic diisocyanates such as, for example, HDI, H₁₂MDI and IPDI.

Suitable triisocyanates are trimers or biurets of aliphatic, cycloaliphatic, aromatic or araliphatic diisocyanates, in particular the isocyanurates and biurets of the diisocyanates described in the preceding paragraph.

The at least one polyisocyanate is reacted with the at least one polyol to produce an isocyanate-terminated polyurethane polymer **PU** with standard methods well known to the person with average skill in the field of polyurethane chemistry.

The isocyanate-functional polyurethane polymer **PU** is then end-capped with at least one hydroxyl-functional epoxide **EP** according to formula (III), 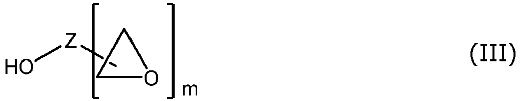 wherein Z and m have the same meaning as described further above.

The aliphatic, cycloaliphatic, aromatic or araliphatic epoxide **EP** which contains a primary or secondary hydroxyl group, also referred to in this document as monohydroxyl epoxide compound contains 1, 2 or 3 epoxide groups. The hydroxyl group of this monohydroxyl epoxide compound **EP** may be a primary or a secondary hydroxyl group.

The epoxy resin **EP** is, in particular, a liquid epoxy resin. The epoxy resin contains or consists of hydroxyl-containing species, in particular the hydroxyl epoxy compound of formula (III). The epoxy resin or liquid epoxy resin can be a commercially available epoxy resin product.

Monohydroxyl epoxide compounds of this kind can be produced, for example, by reacting polyols with epichlorohydrin. Depending on the reaction regime, the reaction of polyfunctional alcohols with epichlorohydrin produces byproducts including the corresponding monohydroxyl epoxide compounds in different concentrations. These can be isolated by routine separation operations. Generally speaking, however, it is sufficient to use the product mixture obtained in the glycidylization reaction of polyols, comprising fully reacted polyol and polyol which has reacted partially to form the glycidyl ether. Examples of hydroxyl-containing epoxides of this kind are butanediol monoglycidyl ether (contained in butanediol diglycidyl ether), hexanediol monoglycidyl ether (contained in hexanediol diglycidyl ether), cyclohexanedimethanol glycidyl ether, trimethylolpropane diglycidyl ether (contained as a mixture in trimethylolpropane triglycidyl ether), glycerol diglycidyl ether (contained as a mixture in glycerol triglycidyl ether), pentaerythritol triglycidyl ether (contained as a mixture in pentaerythritol tetraglycidyl ether). It is preferred to use trimethylolpropane diglycidyl ether, which occurs at a relatively high fraction in customarily prepared trimethylolpropane triglycidyl ether.

It is, however, also possible to use other, similar hydroxyl-containing epoxides, especially glycidol, 3-glycidyloxybenzyl alcohol or hydroxymethylcyclohexene oxide. Further preference is given to the β-hydroxy ether of the formula (IV), which is present with about 5-15 wt.-% in commercial liquid epoxy resins prepared from bisphenol A (R = CH₃) and epichlorohydrin, and also to the corresponding β-hydroxy ethers of the formula (IV), which are formed in the reaction of bisphenol F (R = H) or of the mixture of bisphenol A and bisphenol F with epichlorohydrin. Such liquid epoxy resins of formula (IV) are commercial products, for example, Araldite® GY 250, Araldite® PY 304, Araldite® GY 282 (Huntsman and Hexion) or D.E.R.® 331, D.E.R.® 330 or D.E.R.® 332 (Dow) or Epikote® 828 (Hexion).

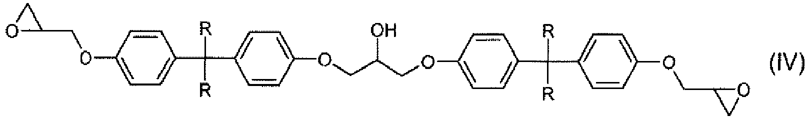

Preference extends to distillation residues which are obtained in the preparation of high-purity, distilled liquid epoxy resins. Distillation residues of this kind have a concentration of hydroxyl-containing epoxides which is up to three times higher than that of commercial undistilled liquid epoxy resins. Example for such a resin is the product Epilox® M850 from Leuna-Harze. Moreover, it is also possible to use a wide variety of epoxides containing a β-hydroxy ether group, prepared by the reaction of (poly)epoxides with a substoichiometric amount of monofunctional nucleophiles such as carboxylic acids, phenols, thiols or secondary amines.

With particular preference the radical Z of formula (I) and (III) is a trivalent radical of either one of the following formulae 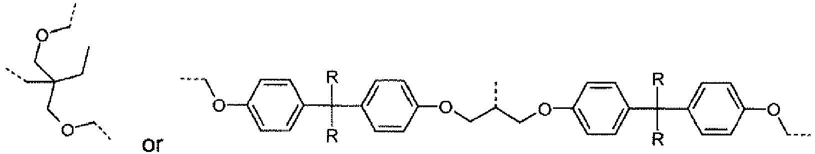 where R is methyl or H.

The free primary or secondary OH functionality of the monohydroxyl epoxide **EP** compound of the formula (III) allows efficient reaction with terminal isocyanate groups of polymers **PU** of formula (II), without the need to use disproportionate excesses of the epoxide component.

The reaction between the monohydroxyl epoxide compound **EP** of the formula (III) and the isocyanate group-terminated linear or branched polyurethane polymer **PU** takes place in a manner which is known per se to a person skilled in the art.

The inventive composition may furthermore preferably and advantageously comprise small, polyfunctional acrylates A, having a molecular weight of less than 2'500 g/mol, more preferably less than 1'000 g/mol, and preferably exhibit an acrylate functionality of at least 2 or 3, preferably at least 4 or 5, or more. These acrylates A can improve the crosslinking of polymer P and help obtaining a stable foam structure. If present, they are preferably included with an amount of between 0.25 and 5 wt.-%, preferably between 0.5 and 2.5 wt.-%, more preferably between 0.75 and 2 wt.-%, based on the total weight of the composition.

Suitable acrylates A with a functionality of 2 include ethylene glycol dimethacrylate, diethylene glycol dimethacrylate, triethylene glycol dimethacrylate, triethylene glycol diacrylate, tripropylene glycol dimethacrylate, 1,3-butanediol dimethacrylate, 1,4-butanediol dimethacrylate, 1,10-dodecanediol dimethacrylate, 1,6-hexandieol dimethacrylate, neopentylglycol dimethacrylate, and polybutylene glycol dimethacrylate, and hexanediol diacrylate. Most preferred acrylate with functionality of 2 is hexanediol diacrylate. Suitable acrylates with a functionality of 3 or higher include glycerol triacrylate, pentaerythritol triacrylate, pentaerythritol trimethacrylate, trimethylolpropane triacrylate, trimethylolpropane trimethacrylate, tetramethylolmethane tetraacrylate, Di-(trimethylolpropane) tetraacrylate, pentraerythritol tetraacrylate, dipentaerythritol pentaacrylate, dipentaerythritol hexaacrylate, tri(2-methacryloxyethyl) trimellitate, tri(2-acryloxyethyl) isocyanurate, as well as their ethoxylated or propoxylated derivates. Most preferred acrylate with functionality of 3 is trimethylolpropane trimethacrylate. Most preferred acrylate with functionality of 5 is dipentaerythritol pentaacrylate. Furthermore suitable are highly functional, hyperbranched acrylates with functionalities of between 6 and 16, or higher. Examples of such acrylates include hyperbranched polyester-polyacrylates, e.g. available under the trade names Sartomer® CN2303 and CN2305 by Sartomer.

Apart from the essential and optional ingredients listed above, the present inventive thermally expandable composition may contain other components commonly used in such compositions and known to the ordinarily skilled artisan in the field. These include, for example, fillers, colorants, dispersion aids or homogenizers, other adhesion promoters, stabilizers, and the like.

The inventive composition may furthermore comprise at least one antioxidant. Antioxidants are commonly used in polymer-based compositions and known to the person skilled in the art of polymer-based composition formulation.

Examples of suitable antioxidants include sterically hindered aromatic amines and/or sterically hindered phenols, such as bis(3,3-bis(4'-hydroxy-3-t-butylphenyl)butanoic acid) glycol ester or tetrakis (methylene(3,5-di-t-butyl-4-hydroxy-hydrocinnamate)) methane. Most preferred antioxidant is tetrakis (methylene(3,5-di-t-butyl-4-hydroxy-hydrocinnamate)) methane. Also preferred is Tetrakis(2,4-di-*tert*-butylphenyl)-4,4-biphenyldiphosphonite.

Antioxidants are preferably included with an amount of between 0.05 and 1.5 wt.-%, preferably between 0.075 and 1 wt.-%, more preferably between 0.1 and 0.5 wt.-%, based on the total weight of the composition.

It may be advantageous to use a synergist together with the antioxidant. Synergists improve the performance of the antioxidant, especially at high temperatures, and may lead to an even better expansion of the inventive composition. Examples of suitable synergists include sterically hindered thioethers, such as didodecyl 3,3'-thiodipropionate, distearyl 3,3'-thiodipropionate and/or zinc-2-mercaptotoluimidazole. Most preferred is didodecyl 3,3'-thiodipropionate.

In a preferred embodiment, the antioxidant is used with an amount of between 0.05 and 1.5 wt.-%, preferably between 0.075 and 1 wt.-%, more preferably between 0.1 and 0.5 wt.-%, based on the total weight of the composition, together with a synergist with an amount of between 0.05 and 1.5 wt.-%, preferably between 0.075 and 1 wt.-%, more preferably between 0.1 and 0.5 wt.-%, based on the total weight of the composition.

In some embodiments, the inventive composition may also include further adhesion promoters. Preferably these substances are incorporated into the polymer network during the cross-linking reactions via functional groups similar to those present in polymer P, such as acrylate groups. The functional groups advantageous for adhesion include, for example, hydroxyl, amine, thiol, carboxyl, anhydride, acrylate, and/or glycidylmethacrylate groups. Suitable adhesion promoters include, for example, ethylene-glycidyl methacrylate copolymers.

Adhesion promoters are preferably used in compositions according to the present invention with an amount of between 2 and 25 wt.-%, preferably between 5 and 20 wt.-%, more preferably between 9 and 15 wt.-%, based on the total weight of the composition.

Suitable as fillers are, e.g., ground or precipitated calcium carbonate, calcium-magnesium carbonate, talcum, gypsum, graphite, barite, silica, silicates, mica, wollastonite, carbon black, or the mixtures thereof, or the like.

Fillers are, if at all, preferably incorporated in the inventive compositions with an amount of between 1 and 15 wt.-%, based on the total weight of the composition.

Colorants or dyes, such as pigments, e.g. on the basis of carbon black, may be included in the present inventive compositions. Their amount is preferably between 0 and 1 wt.-%, based on the total weight of the composition.

Processing agents as well as tackifiers may be beneficial for the present inventive composition in order to facilitate a homogeneously mixed composition. Preferably used such compounds include hydrocarbon resins, for example aromatically modified C5 or C9 hydrocarbon resins, or polyolefin waxes, for example homopolymer polyolefin waxes with melting points between 100 °C and 12 °C, for example Novares® hydrocarbon resins by Rütgers, Germany. Such compounds are preferably included in the inventive compositions with an amount of between 2 and 10 wt.-%, preferably between 3 and 8 wt.-%, more preferably between 4 and 7 wt.-%, based on the total weight of the composition.

An especially preferred embodiment of the inventive composition comprises (a) a first polymer P1, preferably EVA, with an MFI of between 100 and 200 g/10 min and a second polymer P2, preferably EVA, with an MFI of between 0.1 and 60 g/10 min, while a preferred amount for P1 is between 25 and 45 wt.-%, preferably between 30 and 40 wt.-% and for P2 between 20 and 40 wt.-%, preferably between 25 and 36 wt.-% .-%, based on the total weight of the composition, and (b) at least one peroxide, with an amount of between 0.2 and 2.5 wt.-%, preferably between 0.4 and 1.5 wt.-%, based on the total weight of the composition, and (c) at least one acrylate A with an amount of between 0 and 5 wt.-%, in particular between 0.25 and 5 wt.-%, preferably between 0.75 and 2 wt.-%, based on the total weight of the composition, and (d) at least one blowing agent B with an amount of between 2 and 15 wt.-%, preferably between 5 and 10 wt.-%, based on the total weight of the composition, and (e) at least one activator for blowing agent B, preferably ZnO, with an amount of between 0 and 80 wt.-%, preferably between 20 and 35 wt.-%, based on the weight of blowing agent B comprised in the composition, and (f) at least one epoxide group terminated polymer of the formula (I) described above with an amount of between 1 and 30 wt.-%, preferably between 2 and 20 wt.-%, based on the total weight of the composition.

The compositions according to the present inventions can be manufactured by mixing the components in any suitable mixing apparatus, e.g. in a dispersion mixer, planetary mixer, double screw mixer, continuous mixer, extruder, or dual screw extruder.

It may be advantageous to heat the components before or during mixing, either by applying external heat sources or by friction generated by the mixing process itself, in order to facilitate processing of the components into a homogeneous mixture by decreasing viscosities and/or melting of individual components. However, care has to be taken, e.g. by temperature monitoring and use of cooling devices where appropriate, not to exceed the activation temperatures of the blowing agent and/or peroxide. The final composition is preferably essentially solid at room temperature (23 °C), meaning that it does not visibly deform at this temperature just by means of gravity during at least 24 h.

After mixing, the resulting composition may be shaped into its desired form by, e.g., extruding, blow-moulding, pelleting, injection moulding, compression moulding, punching or stamping or any other suitable process.

The thermally expandable compositions may be produced in a substantially one-step process, involving the addition of all components in a series and/or simultaneously. However, it may also be advantageous to formulate the composition as a two-part system, or even multipart system, and mix these parts into the final composition at a later stage. Such an approach may, for example, increase shelf life of the composition in places with demanding conditions (such as extraordinarily high temperatures), optimise storage room demand and transport weight, and allow for tailor-made, modular compositions regarding different applications.

The expansion of the thermally expandable composition according to the present invention is triggered by heat. This means, both the blowing agent and the peroxide component are activated by a thermal process that exceeds their respective activation temperature and exhibits a duration long enough for both processes (peroxide-initiated radical polymerisation and decomposition of the blowing agent including gas formation) to proceed until the expandable material has expanded and cured into its intended final (sufficiently expanded and stable) state. The optimal temperature and duration (dwell time) depends on the blowing agent and peroxide used in the inventive composition. These values are provided by the manufacturers of such components and/or are known to the ordinarily skilled artisan. Commonly, such activation temperatures are in the range of 120 °C to 250 °C, preferably 140 °C to 200 °C, and require a dwell time of between 5 and 90 min, preferably between 10 and 60 min.

Another aspect of the present invention is the use of such thermally expandable compositions for the manufacturing of baffle and/or reinforcement elements. Such elements are used to seal, baffle, and/or reinforce hollow structures, e.g. a cavity in a hollow structural part of an automobile. Hollow parts in cars may include body components (e.g., panels), frame components (e.g., hydroformed tubes), pillar structures (e.g., A, B, C, or D-pillars), bumpers, roofs, or the like.

With regard to activation of the thermally expandable composition according to the present invention when used in automotive manufacturing, it is advantageous to couple the thermal activation of the composition with another process step involving heat treatment. An example for such a process step is electrocoating (cathodic dip painting/coating) of the chassis or car body.

In one preferred embodiment, such a baffle and/or reinforcement element for hollow structures consists essentially of a thermally expandable composition. In this case, it is advantageous to design the shape of the element in a way that it can be easily fitted into and attached to the walls of the hollow structure to be baffled and/or reinforced. Manufacturing is in this case preferably done by injection moulding, punching or stamping, or extrusion through a shape template.

In another preferred embodiment, such a baffle and/or reinforcement element for hollow structures comprises, apart from the thermally expandable composition, a carrier element on which the inventive thermally expandable composition is deposited or attached. Such a design may be more cost-efficient and it may facilitate fixation of the baffle and/or reinforcement element on the walls of the structure to be baffled and/or reinforced, e.g. by incorporation of pins, bolts, or hooks on the carrier element. Furthermore, with a suitable design of the carrier element, the mechanical performance and stability of the baffle and/or reinforcement element according to the present invention can be increased.

Said carrier element may consist of any material that can be processed into a shape useable for an embodiment of the present invention. Preferred materials are polymeric materials, such as a plastic, elastomers, thermoplastics, thermosettable polymers, a blend or other combination thereof, or the like. Preferred thermoplastic materials include, without limitation, polymers such as polyurethanes, polyamides, polyesters, polyolefins, polysulfones, poly(ethylene terephthalates), polyvinylchlorides, chlorinated polyolefins, or the like. Especially preferred are high-temperature stable polymers such as poly(phenyl ethers), polysulfones, polyethersulfones, polyamides, preferably polyamide 6, polyamide 6,6, polyamide 11, polyamide 12, or a mixture thereof. Other suitable materials include metals, especially aluminium or steel, or naturally grown, organic materials, such as wood or other (pressed) fibrous materials. Also glassy or ceramic materials can be used. It is possible to use any combination of such materials. It is also contemplated that such materials can be filled (e.g. with fibres, minerals, clays, silicates, carbonates, combinations thereof or the like) or foamed.

The carrier element can further exhibit any shape or geometry. It can also consist of several, not directly connected parts. For example, it can be massive, hollow, or foamed, or it can exhibit a grid-like structure. The surface of the carrier element can typically be smooth, rough, or structured, according to the intended use of the baffle and/or reinforcement element.

The manufacturing process of a baffle and/or reinforcement element in accordance with the present invention depends largely on the material of the carrier element. If the material of the carrier element can be (injection-) moulded or extruded, the whole baffle and/or reinforcement element can be produced in a two-step injection-moulding process or a co-extrusion process of the carrier element and the thermally expandable composition. If using a two-step injection moulding process, in a first step, material for the carrier element is injected into the mould. After solidification, the cavity of the injection moulding tool is enlarged or adjusted, or the injection-moulded piece is transferred into another tool and the second component, in this case the material for the thermally expandable composition, is injected.

If the carrier element is not shaped by injection-moulding or extrusion, e.g., because it consist of a metal or alloy, it may be first manufactured by a suitable process and then introduced into the injection-moulding tool, and the thermally expandable composition may be injection-moulded into the tool where the carrier element was placed. Another possibility is to extrude the thermally expandable composition onto the pre-fabricated carrier element. Of course there is also the possibility of manufacturing the carrier element and the expandable composition element individually by a suitable process, and then attaching the expandable composition element to the carrier element by any suitable means, such as chemically or physically, e.g. by gluing or the like, or mechanically, e.g. by bolting, screwing, or the like.

Another aspect of the present invention is the use of the baffle and/or reinforcement element as described above to seal, baffle, or reinforce a cavity or hollow structure of a land-, water-, or air-vehicle, preferably an automotive vehicle, and/or a cavity of a building such that the transmission of noise, vibrations, humidity, and/or heat is reduced, and/or the object surrounding said cavity is mechanically strengthened.

A further aspect of the present invention is a method for sealing, baffling and/or reinforcing a cavity or hollow structure, characterised in that an element comprising a thermally expandable composition according as described above is introduced into said cavity or hollow structure and subsequently thermally expanded such that said cavity or hollow structure is at least partially filled by the expanded composition. Preferred temperature for the thermal expansion process is between 110 °C and 210 °C. Preferred baking time for the compositions is between 5 min and 30 min.

The invention is further explained in the following experimental part which, however, shall not be construed as limiting the scope of the invention.

### Examples

### 1. Formulation of example compositions

### 1.1. Compositions

Ten example inventive compositions (C-1 to C-10) and four non-inventive reference compositions (R-1 to R-4) were prepared according to the procedure shown below. The exact individual compositions in wt.-%, based on the total weight of the individual respective composition, are listed in Tables 1 and 2 (inventive compositions) and Table 3 (non-inventive compositions).

**Table 1: Detailed inventive compositions C-1 to C-5 in wt.-% of ingredients based on the total weight of the compositions.**

| *Ingredient* (wt.-%) | **C-1** | **C-2** | **C-3** | **C-4** | **C-5** |
|---|---|---|---|---|---|
| *Polymer P1* | 37.47 | 37.47 | 37.11 | 37.11 | 38.44 |
| *Polymer P2* | 34.17 | 34.17 | 33.83 | 33.83 | 35.04 |
| *Adhesion promoter AP1* | 5.52 | - | 5.46 | - | 2.07 |
| *Adhesion promoter AP2* | - | 5.52 | - | 5.46 | - |
| *Adhesion promoter Ref.1* | - | - | - | - | - |
| *Adhesion promoter Ref.2* | - | - | - | - | - |
| *Tackifier* | 5.52 | 5.52 | 5.46 | 5.46 | 5.66 |
| *Antistatic agent* | - | - | 1.00 | 1.00 | 1.04 |
| *Activator for blowing agent* | 5.52 | 5.52 | 5.46 | 5.46 | 5.66 |
| *Blowing agent* | 6.97 | 6.97 | 6.90 | 6.90 | 7.15 |
| *Peroxide* | 1.26 | 1.26 | 1.25 | 1.25 | 1.29 |
| *Acrylate A* | 1.55 | 1.55 | 1.53 | 1.53 | 1.58 |
| *Binder* | 2.02 | 2.02 | 2.00 | 2.00 | 2.07 |
| *TOTAL* | 100 | 100 | 100 | 100 | 100 |

**Table 2: Detailed inventive compositions C-6 to C-10 in wt.-% of ingredients based on the total weight of the compositions.**

| *Ingredient* (wt.-%) | **C-6** | **C-7** | **C-8** | **C-9** | **C-10** |
|---|---|---|---|---|---|
| *Polymer P1* | 38.44 | 35.50 | 35.50 | 32.40 | 32.40 |
| *Polymer P2* | 35.04 | 32.36 | 32.36 | 29.53 | 29.53 |
| *Adhesion promoter AP1* | - | 9.57 | - | 17.46 | - |
| *Adhesion promoter AP2* | 2.07 | - | 9.57 | - | 17.46 |
| *Adhesion promoter Ref.1* | - | - | - | - | - |
| *Adhesion promoter Ref.2* | - | - | - | - | - |
| *Tackifier* | 5.66 | 5.22 | 5.22 | 4.77 | 4.77 |
| *Antistatic agent* | 1.04 | 0.96 | 0.96 | 0.87 | 0.87 |
| *Activator for blowing agent* | 5.66 | 5.22 | 5.22 | 4.77 | 4.77 |
| *Blowing agent* | 7.15 | 6.60 | 6.60 | 6.02 | 6.02 |
| *Peroxide* | 1.29 | 1.20 | 1.20 | 1.09 | 1.09 |
| *Acrylate A* | 1.58 | 1.46 | 1.46 | 1.34 | 1.34 |
| *Binder* | 2.07 | 1.91 | 1.91 | 1.75 | 1.75 |
| *TOTAL* | 100 | 100 | 100 | 100 | 100 |

**Table 3: Detailed non-inventive reference compositions R-1 to R-4 in wt.-% of ingredients based on the total weight of the compositions.**

| *Ingredient* (wt.-%) | **R-1** | **R-2** | **R-3** | **R-4** |
|---|---|---|---|---|
| *Polymer P1* | 37.47 | 38.85 | 39.66 | 39.24 |
| *Polymer P2* | 34.17 | 35.41 | 36.16 | 35.78 |
| *Adhesion promoter AP1* | - | - | - | - |
| *Adhesion promoter AP2* | - | - | - | - |
| *Adhesion promoter Ref.1* | 5.52 | - | - | - |
| *Adhesion promoter Ref.2* | - | 1.05 | - | - |
| *Tackifier* | 5.52 | 5.71 | 5.84 | 5.78 |
| *Antistatic agent* | - | 1.05 | - | 1.06 |
| *Activator for blowing agent* | 5.52 | 5.71 | 5.84 | 5.78 |
| *Blowing agent* | 6.97 | 7.22 | 7.38 | 7.30 |
| *Peroxide* | 1.26 | 1.31 | 1.34 | 1.32 |
| *Acrylate A* | 1.55 | 1.60 | 1.64 | 1.62 |
| *Binder* | 2.02 | 2.09 | 2.14 | 2.12 |
| *TOTAL* | 100 | 100 | 100 | 100 |

Details on the ingredients used in the inventive example compositions C-1 to C-10 and non-inventive reference compositions R-1 to R-4 described herein are listed in Table 4.

**Table 4: Details on the ingredients used in the inventive and non-inventive example compositions C-1 to C-10 and R-1 to R-4.**

| ***Ingredient*** | **Description** |
|---|---|
| *Polymer P1* | Ethylene-vinyl acetate (EVA) with 18 wt.-% vinyl acetate monomer and a melt flow index (MFI) of 150 g/10 min (ASTM D1238) |
| *Polymer P2* | EVA with 28 wt.-% vinyl acetate monomer and MFI of 6 g/10 min (ASTM D1238) |
| *Adhesion promoter AP1* | Epoxy-functional polyurethane (synthesis below) |
| *Adhesion promoter AP2* | Epoxy-functional polyurethane (synthesis below) |
| *Adhesion promoter Ref.1* | Ethylene-glycidyl methacrylate copolymer (8 wt.-% glycidyl methacrylate) with MFI of 5 g/10 min (Lotader® AX 8840) |
| *Adhesion promoter Ref.2* | Triglycidylether of trimethyolpropane (Araldite® DY-T) |
| *Tackifier* | Aromatic C9 hydrocarbon resin (Novares® TL 90, Rütgers) |
| *Antistatic agent* | Sodium alkane sulfonate (Armostat® 3002, AkzoNobel) |
| *Activator for blowing agent* | Zinc oxide |
| *Blowing agent* | Azodicarbonamide |
| *Peroxide* | Di-(2-tert.-butyl-peroxyisopropyl)-benzene (40 wt.-%) on calcium carbonate and silica |
| *Acrylate A* | Dipentaerythritol pentaacrylate |
| *Binder* | Polyvinyl butyral (18-21 wt.-% polyvinyl alcohol, 1-4 wt.-% polyvinyl acetate) (Mowital® B 45 H, Kuraray Europe GmbH) |

### 1.2. Syntheses of two exemplary inventive adhesion promoters AP1 and AP2

Two epoxy-functional polyurethane polymers serving as inventive adhesion promoters were synthesized according to the procedures below. The raw materials used are listed in Table 5.

**Table 5: Details on the ingredients used in the inventive and non-inventive example compositions C-1 to C-10 and R-1 to R-4.**

| | | |
|---|---|---|
| PolyTHF® 2000 | Polyol, (difunctional polybutylene glycol with a molecular weight of 2000 g/mol) | BASF |
| Krasol® LBH-P 2000 | Hydroxyl-terminated polybutadiene, OH functionality approximately 1.9 | Cray Valley |
| Ionol® CP (= BHT) | Stabilizer | Evonik |
| Isophorone diisocyanate (= IPDI) | Isocyanate | Evonik |
| Epikote® 828LVEL | Standard bisphenol A epoxy resin, liquid epoxy resin produced from bisphenol A and epichlorohydrin, Mw ≤ 700 | Hexion |
| Araldite® DY-T | Triglycidylether of trimethyolpropane (contains diglycidylether of trimethyolpropane) | Huntsman |
| Dibutyltin dilaurate (= DBTL) | Catalyst | Thorson |
| 4-Methyl phthalic acid anhydride 95% (= MHPTA) | Glycol scavenger | Sigma-Aldrich, Art. No. 348317 |

### Synthesis of AP1

210 g PolyTHF® 2000, 140 g Krasol®LBH-P 2000, 1.036 g MHPTA, 1.4 g BHT, and 138.161 g Araldite® DY-T (1 equivalent relative to the isocyanate groups) were dried for 1 hour in a vacuum at 90 °C. Subsequently, 67.16 g IPDI (1.0 equivalent) and 0.101 g dibutyltin dilaurate (DBTL) as catalyst were added. The mixture was reacted for 2 h at 90 °C. Then, a catalyst consisting of a bismuth compound and of an aromatic nitrogen compound was added and the reaction was continued at 90 °C until the free NCO content was less than 0.25%.

### Synthesis of AP2

150 g PolyTHF® 2000, 2.434 g MHPTA, 324.52 g Epikote®828 LVEL (1 equivalent relative to the isocyanate groups) were dried for 1 hour in a vacuum at 90 °C. Subsequently, 28.93 g IPDI (1.0 equivalent) and 0.043 g dibutyltin dilaurate (DBTL) as catalyst were added. The mixture was reacted for 2 h at 90 °C. Then, a catalyst consisting of a bismuth compound and of an aromatic nitrogen compound was added and the reaction was continued at 90 °C until the free NCO content was less than 0.25%.

### 1.2. Mixing and moulding procedure

All inventive and non-inventive example compositions in this document were produced on standard production equipment suitable to compound thermoplastics with temperature control, i.e. twin screw extruder, Buss kneader or Banbury mixer. Polymers were mixed until homogeneous, then the system was cooled below activation of heat reactive raw materials. Heat reactive raw materials were then mixed into the system until homogeneous. Material was subsequently shape formed while hot into sample shapes that were used for expansion testing procedures.

### 2. Expansion and adhesion testing of example compositions

Expansion and expansion stability was tested in all samples by heat treatment (baking) of the individual samples at two different temperatures during 30 min in an oven. The heating ramp from room temperature (23 °C) to the respective baking temperature was always 20 min. The temperatures and magnitude of expansion (in % based on the original volume prior to expansion) at the corresponding baking temperatures are shown in Tables 6 and 7 for the inventive compositions and in Table 8 for the non-inventive reference compositions.

Expansions were quantified for each sample by measuring the density before and after expansion. The densities were determined according to DIN EN ISO 1183 using the water immersion method (Archimedes principle) in deionised water and a precision balance to measure the mass.
The expansion stability can be estimated by comparing the volumetric thermal expansion (in %, based on the original volume in the non-expanded state) of a sample at different temperatures.

Adhesion was tested after expansion of the individual compositions at 175 °C on samples where the compositions were expanded between two oil-covered hot-dip galvanized steel sheets. The oil used for testing was ANTICORIT® PL 3802-39S (Fuchs Lubritech, Germany) which was applied on the steel sheets with an amount of 3g/m². The values shown in the results table give the percentage of cohesive failure. Values lower than 100 indicate partial adhesive failure of the samples.

**Table 6: Volumetric thermal expansion (in %) of the inventive composition C-1 to C-5 samples at different temperatures and adhesion test results on oil-covered substrate.**

| ***Example*** | **C-1** | **C-2** | **C-3** | **C-4** | **C-5** |
|---|---|---|---|---|---|
| Expansion at 175 °C [%] | 1680 | 1677 | 1483 | 1397 | 1542 |
| Expansion at 200 °C [%] | 1594 | 1314 | 1465 | 1220 | 1465 |
| Adhesion cohesive failure [%] | 100 | 100 | 100 | 100 | 100 |

**Table 7: Volumetric thermal expansion (in %) of the inventive composition C-6 to C-10 samples at different temperatures and adhesion test results on oil-covered substrate.**

| ***Example*** | **C-6** | **C-7** | **C-8** | **C-9** | **C-10** |
|---|---|---|---|---|---|
| Expansion at 175 °C [%] | 1451 | 1448 | 1379 | 1026 | 1196 |
| Expansion at 200 °C [%] | 1424 | 1448 | 1421 | 1154 | 1126 |
| Adhesion cohesive failure [%] | 100 | 100 | 100 | 100 | 100 |

**Table 8: Volumetric thermal expansion (in %) of the non-inventive reference composition R-1 to R-4 samples at different temperatures and adhesion test results on oil-covered substrate.**

| ***Example*** | **R-1** | **R-2** | **R-3** | **R-4** |
|---|---|---|---|---|
| Expansion at 175 °C [%] | 1956 | 1571 | 1713 | 1695 |
| Expansion at 200 °C [%] | 1757 | 1698 | 1663 | 1752 |
| Adhesion cohesive failure [%] | 20 | 70 | 50 | 50 |

The results in Tables 6 to 8 show that only the inventive compositions are able to provide an optimal adhesion on oily substrates. All inventive samples show 100 % cohesive failure, while none of the reference examples using conventional adhesion promoters do. Inventive examples C-5 and C-6, both containing only 2.07 wt.-% inventive adhesion promoter, still show better adhesion results than reference example R-1, containing a higher amount of a conventional adhesion promoter (5.52 wt.-%).
Expansion behaviour is stable in all studied examples and reaches values of at least 1000%, showing that the use of the novel inventive adhesion promoters does not have a significant negative influence on the expansion of the compositions.

Of course the present invention is not limited to the examples described herein, which only illustrate the general principle of the present invention, or selected embodiments. A person of ordinary skill in the art would realise, however, that certain modifications would come within the teachings of the present invention. Therefore, the following claims should be studied to determine the true scope and content of the invention.

## Claims

1. Thermally expandable composition, comprising
(a) at least one polymer P, cross-linkable by peroxide,
(b) at least one peroxide,
(c) preferably at least one acrylate A,
(d) at least one blowing agent B,
(e) preferably at least one activator for blowing agent B,
(f) at least one epoxide group terminated polymer of the formula (I), 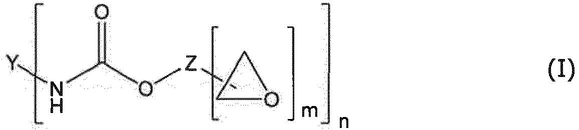 wherein Y represents a n-valent radical of a linear or branched polyurethane polymer PU terminated with isocyanate groups after the removal of the n terminal isocyanate groups, Z represents a (1+m)-valent radical of an aliphatic, cycloaliphatic, aromatic or araliphatic epoxide containing a primary or secondary hydroxyl group after the removal of the hydroxyl group and m epoxide groups, m represents an integer with a value of 1, 2, or 3, and n represents an integer with a value from 2 to 4.

2. Thermally expandable composition according to claim 1, wherein m has a value of 2.

3. Thermally expandable composition according to claim 1 or 2, wherein said blowing agent B comprises azodicarbonamide and/or 4,4'-oxybis(benzenesulphonyl hydrazide).

4. Thermally expandable composition according to any one of claims 1 to 3, wherein said acrylate A comprises dipentaerythritol pentaacrylate and/or trimethylolpropane trimethacrylate.

5. Thermally expandable composition according to any one of claims 1 to 3, wherein said polyurethane polymer PU is a reaction product of a polyisocyanate, preferably isophorone diisocyanate, and a polyether polyol, preferably polytetrahydrofuran, and optionally a hydroxyl-functional polybutadiene polyol.

6. Thermally expandable composition according to any one of claims 1 to 5, wherein said peroxide comprises di-(2-*tert*-butyl-peroxyisopropyl)-benzene, preferably immobilized on an inert support material.

7. Thermally expandable composition according to any one of claims 1 to 6, wherein said polymer P comprises ethylene vinyl acetate and/or ethylene butyl acrylate.

8. Thermally expandable composition according to any one of claims 1 to 7, wherein said polymer P comprises or essentially consists of at least two polymers P1 and P2, wherein P1 exhibits a melt flow index (MFI) of between 100 and 200 g/10 min, and P2 exhibits a melt flow index of between 0.1 and 60 g/10 min, wherein MFI is determined by ASTM D1238.

9. Baffle and/or reinforcement element for hollow structures, wherein said element comprises or essentially consists of a thermally expandable composition according to any of claims 1 to 8.

10. Baffle and/or reinforcement element of claim 9, wherein that said element comprises a carrier on which the thermally expandable composition is deposited or attached, wherein said carrier is made of a thermoplastic material, preferably at least one thermoplastic polymer selected from epoxy resin, ethylene-vinyl acetate, polyurethane, polyolefin, or a derivate or a mixture thereof.

11. A process for manufacturing a baffle and/or reinforcement element according to claim 10, wherein the thermally expandable composition is injection-moulded onto the carrier or co-extruded with the carrier.

12. A process for foaming a thermally expandable composition according to any one of claims 1 to 8, wherein said thermally expandable composition is subjected to a temperature of between 150 and 210 °C for between 10 and 60 min.

13. Use of the baffle and/or reinforcement element of any one of claims 9 or 10 to seal, baffle, or reinforce a cavity or hollow structure of a land-, water-, or air-vehicle, preferably an automotive vehicle, and/or a cavity of a building such that the transmission of noise, vibrations, humidity, and/or heat is reduced, and/or the object surrounding said cavity is mechanically strengthened.

14. Method for sealing, baffling and/or reinforcing a cavity or hollow structure, wherein an element comprising a thermally expandable composition according to any of claims 1 to 8 is introduced into said cavity or hollow structure and subsequently thermally expanded such that said cavity or hollow structure is at least partially filled by the expanded composition.

## Patentansprüche

1. Thermisch expandierbare Zusammensetzung, umfassend
(a) mindestens ein Polymer P, das mit Peroxiden vernetzbar ist,
(b) mindestens ein Peroxid,
(c) vorzugsweise mindestens ein Acrylat A,
(d) mindestens ein Treibmittel B,
(e) vorzugsweise mindestens einen Aktivator für das Treibmittel B,
(f) mindestens ein Polymer mit der Formel (I) und einer endständigen Epoxidgruppe, 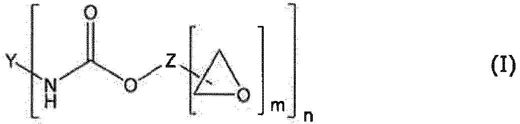 wobei Y einen n-wertigen Rest eines unverzweigten oder verzweigten Polyurethanpolymers PU, das endständige Isocyanatgruppen aufweist, nach Entfernung der n endständigen Isocyanatgruppen darstellt, Z einen (1+m)-wertigen Rest eines aliphatischen, cycloaliphatischen, aromatischen oder araliphatischen Epoxids, das eine primäre oder sekundäre Hydroxygruppe enthält, nach Entfernung der Hydroxygruppe und von m Epoxidgruppen darstellt, m eine ganze Zahl mit einem Wert von 1, 2 oder 3 darstellt und n eine ganze Zahl mit einem Wert von 2 bis 4 darstellt.

2. Thermisch expandierbare Zusammensetzung nach Anspruch 1, wobei m einen Wert von 2 aufweist.

3. Thermisch expandierbare Zusammensetzung nach Anspruch 1 oder 2, wobei das Treibmittel B Azodicarbonamid und/oder 4,4'-Oxybis(benzolsulphonylhydrazid) umfasst.

4. Thermisch expandierbare Zusammensetzung nach einem der Ansprüche 1 bis 3, wobei das Acrylat A Dipentaerythritolpentaacrylat und/oder Trimethylolpropantrimethacrylat umfasst.

5. Thermisch expandierbare Zusammensetzung nach einem der Ansprüche 1 bis 3, wobei das Polyurethanpolymer PU ein Reaktionsprodukt aus einem Polyisocyanat, vorzugsweise Isophorondiisocyanat, und einem Polyetherpolyol, vorzugsweise Polytetrahydrofuran, und gegebenenfalls einem hydroxyfunktionellen Polybutadienpolyol ist.

6. Thermisch expandierbare Zusammensetzung nach einem der Ansprüche 1 bis 5, wobei das Peroxid Di-(2-*tert-*butyl-peroxyisopropyl)-benzol umfasst, das vorzugsweise auf einem inerten Trägermaterial immobilisiert ist.

7. Thermisch expandierbare Zusammensetzung nach einem der Ansprüche 1 bis 6, wobei das Polymer P Ethylenvinylacetat und/oder Ethylenbutylacrylat umfasst.

8. Thermisch expandierbare Zusammensetzung nach einem der Ansprüche 1 bis 7, wobei das Polymer P mindestens zwei Polymere P1 und P2 umfasst oder im Wesentlichen daraus besteht, wobei P1 einen Schmelzindex (MFI) zwischen 100 und 200 g/10 min aufweist und P2 einen Schmelzindex zwischen 0,1 und 60 g/10 min aufweist, wobei der MFI nach ASTM D1238 bestimmt wird.

9. Abschott- und/oder Verstärkungselement für Hohlstrukturen, wobei das Element eine thermisch expandierbare Zusammensetzung nach einem der Ansprüche 1 bis 8 umfasst oder im Wesentlichen daraus besteht.

10. Abschott- und/oder Verstärkungselement nach Anspruch 9, wobei das Element einen Träger umfasst, auf dem die thermisch expandierbare Zusammensetzung aufgebracht oder befestigt ist, wobei der Träger aus einem thermoplastischen Werkstoff gefertigt ist, vorzugsweise mindestens einem thermoplastischen Polymer ausgewählt aus Epoxidharz, Ethylenvinylacetat, Polyurethan, Polyolefin oder einem Derivat davon oder einer Mischung daraus.

11. Verfahren zur Herstellung eines Abschott- und/oder Verstärkungselements nach Anspruch 10, wobei die thermisch expandierbare Zusammensetzung auf den Träger spritzgegossen wird oder gemeinsam mit dem Träger coextrudiert wird.

12. Verfahren zum Schäumen einer thermisch expandierbaren Zusammensetzung nach einem der Ansprüche 1 bis 8, wobei die thermisch expandierbare Zusammensetzung zwischen 10 und 60 min lang einer Temperatur zwischen 150 und 210 °C ausgesetzt wird.

13. Verwendung des Abschott- und/oder Verstärkungselements nach Anspruch 9 oder 10 zum Abdichten, Abschotten oder Verstärken eines Hohlraums oder einer Hohlstruktur eines Land-, Wasser- oder Luftfahrzeugs, vorzugsweise eines Kraftfahrzeugs, und/oder eines Hohlraums eines Gebäudes derart, dass die Übertragung von Schall, Schwingungen, Feuchtigkeit und/oder Wärme vermindert wird und/oder das den Hohlraum umgebene Objekt mechanisch verstärkt wird.

14. Verfahren zum Abdichten, Abschotten und/oder Verstärken eines Hohlraums oder einer Hohlstruktur, wobei ein Element, das eine thermisch expandierbare Zusammensetzung nach einem der Ansprüche 1 bis 8 umfasst, in den Hohlraum oder die Hohlstruktur eingebracht und anschließend thermisch expandiert wird, sodass der Hohlraum oder die Hohlstruktur zumindest teilweise mit der expandierten Zusammensetzung gefüllt ist.

## Revendications

1. Composition thermiquement expansible, comprenant
(a) au moins un polymère P, pouvant être réticulé par peroxyde,
(b) au moins un peroxyde,
(c) préférablement au moins un acrylate A,
(d) au moins un agent de gonflement B,
(e) préférablement au moins un activateur pour l'agent de gonflement B,
(f) au moins un polymère à terminaison de type groupe époxyde de la formule (I), 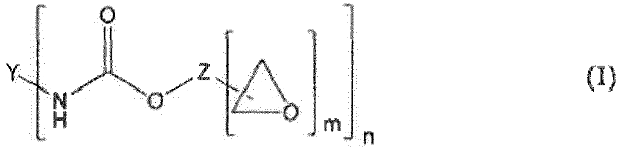 Y représentant un radical n-valent d'un polymère de polyuréthane PU linéaire ou ramifié dont les terminaisons sont de type groupes isocyanate, après la suppression des n groupes isocyanates terminaux, Z représentant un radical (1 + m)-valent d'une époxyde aliphatique, cycloaliphatique, aromatique ou araliphatique contenant un groupe hydroxyle primaire ou secondaire après la suppression du groupe hydroxyle et de m groupes époxyde, m représentant un entier d'une valeur de 1, 2 ou 3, et n représentant un entier d'une valeur de 2 à 4.

2. Composition thermiquement expansible selon la revendication 1, m possédant une valeur de 2.

3. Composition thermiquement expansible selon la revendication 1 ou 2, ledit agent de gonflement B comprenant de l'azodicarbonamide et/ou du 4,4'-oxybis(hydrazide de benzènesulfonyle).

4. Composition thermiquement expansible selon l'une quelconque des revendications 1 à 3, ledit acrylate A comprenant du pentaacrylate de dipentaérythritol et/ou du triméthacrylate de triméthylolpropane.

5. Composition thermiquement expansible selon l'une quelconque des revendications 1 à 3, ledit polymère de polyuréthane PU étant un produit de réaction d'un polyisocyanate, préférablement du diisocyanate d'isophorone, et d'un polyéther polyol, préférablement de polytétrahydrofuranne, et éventuellement d'un polybutadiène polyol à fonctionnalité hydroxyle.

6. Composition thermiquement expansible selon l'une quelconque des revendications 1 à 5, ledit peroxyde comprenant du di-(2-*tert-*butylperoxyisopropyl)-benzène, préférablement immobilisé sur un matériau de support inerte.

7. Composition thermiquement expansible selon l'une quelconque des revendications 1 à 6, ledit polymère P comprenant de l'éthylène-acétate de vinyle et/ou de l'éthylène-acrylate de butyle.

8. Composition thermiquement expansible selon l'une quelconque des revendications 1 à 7, ledit polymère P comprenant ou étant essentiellement constitué d'au moins deux polymères P1 et P2, P1 présentant un indice de fluidité (IF) entre 100 et 200 g/10 min, et P2 présentant un indice de fluidité entre 0,1 et 60 g/10 min, l'IF étant déterminé selon la norme ASTM D1238.

9. Élément d'isolation et/ou de renfort pour des structures creuses, ledit élément comprenant ou étant essentiellement constitué d'une composition thermiquement expansible selon l'une quelconque des revendications 1 à 8.

10. Élément d'isolation et/ou de renfort selon la revendication 9, ledit élément comprenant un support sur lequel la composition thermiquement expansible est déposée ou attachée, ledit support étant composé d'un matériau thermoplastique, préférablement d'au moins un polymère thermoplastique choisi parmi une résine époxy, de l'éthylène-acétate de vinyle, un polyuréthane, une polyoléfine, ou un dérivé ou un mélange correspondant.

11. Procédé pour la fabrication d'un élément d'isolation et/ou de renfort selon la revendication 10, la composition thermiquement expansible étant moulée par injection sur le support ou coextrudée avec le support.

12. Procédé pour le moussage d'une composition thermiquement expansible selon l'une quelconque des revendications 1 à 8, ladite composition thermiquement expansible étant soumise à une température de 150 à 210°C pendant entre 10 et 60 min.

13. Utilisation de l'élément d'isolation et/ou de renfort selon l'une quelconque des revendications 9 ou 10 pour le scellement, l'isolation ou le renforcement d'une cavité ou d'une structure creuse d'un véhicule terrestre, aquatique ou aérien, préférablement d'un véhicule automobile, et/ou d'une cavité d'un bâtiment de sorte que la transmission de bruit, de vibrations, d'humidité et/ou de chaleur est réduite, et/ou l'objet entourant ladite cavité est mécaniquement renforcé.

14. Procédé pour le scellement, l'isolation et/ou le renforcement d'une cavité ou d'une structure creuse, un élément comprenant une composition thermiquement expansible selon l'une quelconque des revendications 1 à 8 étant introduit dans ladite cavité ou ladite structure creuse et étant ultérieurement thermiquement expansé de sorte que ladite cavité ou ladite structure creuse est au moins remplie partiellement par la composition expansée.
